# EUROPEAN PATENT SPECIFICATION

(11) **EP 0 483 949 B1**
(45) Date of publication and mention of the grant of the patent: **22.02.1995**
(21) Application number: 91305390.6
(22) Date of filing: 14.06.1991
(51) Int. Cl.: B63B 1/06, B63B 1/08

(54) **Ship's hull**
Schiffsrumpf
Coque de bateau

(30) Priority: 01.11.1990 JP 296855/90; 14.12.1990 JP 403265/90; 20.12.1990 JP 404339/90
(43) Date of publication of application: 06.05.1992
(73) Proprietor: ISHIKAWAJIMA-HARIMA JUKOGYO KABUSHIKI KAISHA, Chiyoda-ku Tokyo-to (JP)
(72) Inventor: Miyata, Hideaki, Kashiwanohakoen Danchi 7-15, Kashiwa-shi, Chiba-ken (JP); Michida, Ryoji, Yokohama-shi, Kanagawa-ken (JP)
(74) Representative: Jennings, Nigel Robin

(56) References cited:
- FR-A- 636 013
- GB-A- 1 295 211
- GB-A- 1 453 663
- US-A- 3 540 400
- US-A- 4 323 026
- US-A- 4 550 673
- US-A- 4 658 746
- MACHINE DESIGN vol. 58, no. 10, 8 May 1986, CLEVELAND,OHIO,U.S.A. pages 19 -21; NOBBE: 'submerged-hull ships tame the high seas'

## Description

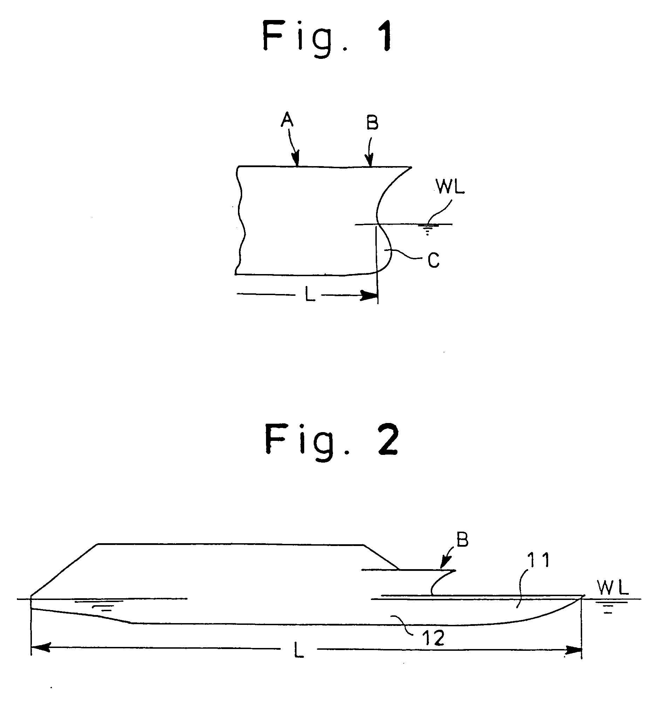

The present invention relates to a hull for a ship. Figure 1 is a diagrammatic scrap side view of the front of a known ship's hull in which the main body or hull A of the vessel has a rounded protuberance C at its bow B so as to reduce the formation of a bow wave and thus water resistance during navigation.

Though the resistance to motion may be reduced, the conventional vessel cannot sail at high speed, since the bulbous portion C is positioned below the water line WL and the water line length L of the vessel between bow and stern at the water line WL is almost the same as that of a vessel with no bulbous portion. Thus an increase of the water line length which is generally known as a way for increasing the maximum sailing speed, is not obtained in a conventional vessel with a rounded bulbous portion C at its bow below the water line. Moreover, the bulbous portion C has substantially no effect on oscillation or rocking of the vessel main body A caused by waves and, in particular, cannot reduce pitching of the main body A which may cause discomfort to persons on board and/or movement of cargo.

It is thus an object of the present invention to provide a hull which not only reduces the resistance to movement but also the movement of the vessel, such as pitching, caused by waves.

GB-A-1295211, on which the precharacterising portion of claim 1 is based, discloses a ship whose hull has a forwardly projecting bulbous portion connected to its lower portion, the upper surface of which is above the water level in calm water conditions.

Attempts are now being made to develop extremely long vessels which have a substantially increased ratio of vessel length to vessel width in order to reduce the resistance to movement during high-speed navigation.

Thus, a vessel, as shown schematically in side elevation in Figure 2, is now being developed, which has an extension 11 extending beyond the hull trunk or main portion 12 at the bow B and results in the vessel having an increased overall length L.

In the above described high-speed vessel with a forward extension at the bow, the extension may strike against a quay and be damaged upon approaching and leaving a pier.

It is thus a further object of the present invention to provide a hull which is not subject to the risk of being damaged when the vessel with a forward extension of the hull is moored to and unmoored from the pier.

The oscillation of a vessel is composed of various components including heaving and dipping (movement vertically up and down) in the vertical direction and pitching caused by periodic changes of buoyancy when waves pass by. Rapid upward and downward movement of the hull caused by pitching, heaving and dipping is known to be a major cause of seasickness. To reduce the oscillation of a vessel, a bilge keel may be provided on the underside of a vessel along its length. The bilge keel functions effectively against rolling, but cannot positively reduce heaving caused by periodic changes of buoyancy when waves pass since the keel is spaced vertically from the metacentre of the vessel.

A further object of the present invention is to provide a hull which results in an increase in the contact area of the vessel with the waves in order to increase its buoyancy and reduce the heaving which is a major cause of seasickness.

In accordance with the present invention a hull of the type comprising an extension extending forwardly from the lower portion of the bow of the main hull body, the extension having an upper deck surface which is above the water level in calm water conditions, is characterised in that the extension includes a tip of hard rubber and an expanding bellows and that means are provided to expand and contract the bellows and thus displace the tip horizontally. The tip may thus be retracted when not required so as to minimise the risk of damage.

Additionally, the hull may include a bulbous portion extending rearwardly from the lower portion of the stern of the main hull body and having an upper deck surface which is above the water level in calm water conditions.

A hull having an extension or bulbous protrusion in accordance with the present invention has a reduced tendency to create waves which cause water resistance but the length of the main body of the hull is not increased though the extension or bulbous portion functions to increase the water line length of the vessel. The pitching of the vessel in waves is effectively reduced since the extension at the bow constitutes a double-deck structure.

Further features and details of the present invention will be apparent from the following description of one specific embodiment which is given by way of example with reference to Figures 3 to 6 of the accompanying drawings, in which:-
Figure 3 is a partial cutaway view showing a hull according to the present invention;
Figure 4 is a side view of the hull of Figure 3 in which the extension is retracted;
Figure 5 is a side view of the stern of a modification of the hull shown in Figures 3 and 4; and
Figure 6 is a diagram showing the difference in pitching at the bow with and without a protruding extension.

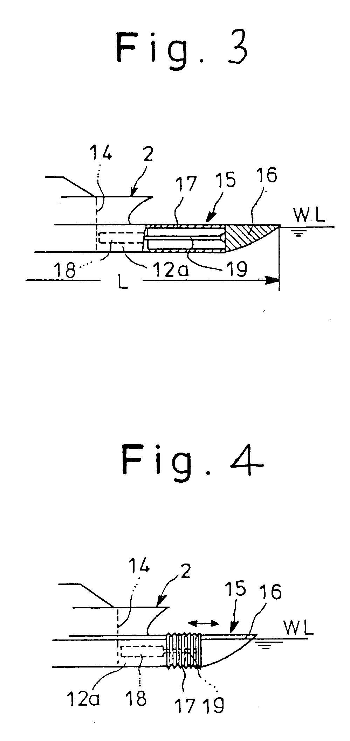

Referring to Figures 3 and 4, the front portion 12a at the bow 2 of the hull is partitioned by a transverse bulkhead 14 and has an extension 15. The extension 15 comprises a fixed portion 16 made of hard rubber and an expanding bellows 17 which can adopt the same external shape as that of the fixed portion 16 to become a part of the trunk 12a, when expanded. A device for injecting and discharging compressed air into or from the bellows 17 and a hydraulic cylinder 18 for expanding or contracting the bellows 17 are provided. The piston rod 19 of the hydraulic cylinder 18 is connected through the bellows 17 to the fixed portion 16. By injecting or exhausting the air into or from the bellows 17 and by extending or retracting the piston rod 19 of the hydraulic cylinder 18, the bellows 17, and thus the extended portion 15, is extended or retracted.

When the hydraulic cylinder 18 is extended and compressed air is injected into the expanded bellows 17, the bellows 17 is maintained in its expanded shape by its internal pressure. This increases the water line length L and reduces wave making resistance during high-speed navigation. Since the extended portion 15 may contact some objects floating in the sea, the bellows 17 must be made of material which cannot be damaged by striking against such objects.

The extension 15 is to be made shorter or retracted when approaching a pier for mooring since the vessel is not sailing at high speed. Thus the air in the bellows 17 is discharged and the hydraulic cylinder 18 is retracted to pull back the fixed portion 16 and contract the bellows 17. As a result, the extension portion 15 is shortened, as shown in Figure 4, which reduces the risk of striking of the extension 15 against the pier and avoids any difficulty in the approach of the vessel to the pier.

The vessel of this embodiment may be either a catamaran or a single hull vessel.

Due to the fact that the upper surface of the extension 15 is positioned a little above the water line WL when the vessel main body or hull is in smooth water, the water line length of the vessel hull is the sum of the original water line length without the extension 3 and the additional water line length of the extension 15. Thus the water line length of the vessel is increased without increasing the length of the vessel main body itself to thereby substantially reduce the wave making resistance of the vessel during navigation. As a result, the vessel can sail at higher speed than the conventional vessel shown in Figure 1.

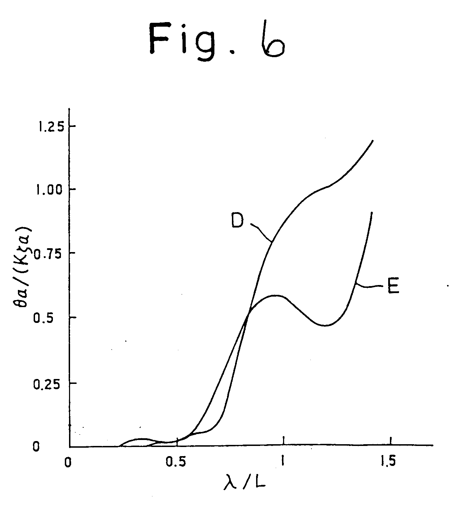

The bow 2 constitutes a double-deck structure due to the extension 15 with its flat deck surface, so that both the weight of the portion of the vessel portion above the deck surface and the buoyancy of the vessel in waves can be reduced. This effectively reduces the longitudinal movement, and particularly pitching, of the vessel hull, which fact is evident from Figure 6 showing the relationship between wave magnitude and buoyancy. The X axis shows the ratio of wavelength to waterline length of the vessel and the Y axis shows the magnitude of the pitching angle. L is the waterline length of the vessel, λ is the wavelength and ϑa/(kζa) is the magnitude of the pitching angle. The pitching curve for a buoyancy of vessel without an extension is shown by line D and that for a vessel with the extension, by line E. When the extension is present the pitching of the vessel hull can be effectively reduced in an area with high oscillation.

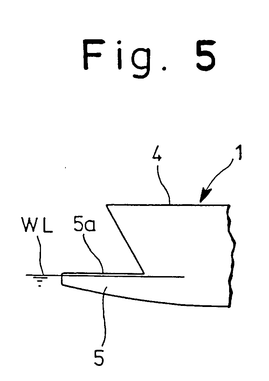

In the modification shown in Figure 5, in addition to the extension 15 on the bow 2, an extension 5, whose upper surface constitutes a flat deck surface 5a, is provided on the lower portion of the stern 4 of the vessel main body 1. The deck surface 5a is positioned above the water line WL, as in the embodiment of Figures 3 and 4, thereby providing the stern 4 with a double-deck structure. This embodiment further reduces the wave making resistance and pitching.

## Claims

1. A hull comprising an extension (15) extending forwardly from the lower portion of the bow (2) of the main hull body, the extension having an upper deck surface which is above the water level (WL) in calm water conditions, characterised in that the extension (15) includes a tip (16) of hard rubber and an expanding bellows (17) and that means (18) are provided to expand and contract the bellows (17) and thus displace the tip (16) horizontally.

2. A hull as claimed in claim 1, characterised by a bulbous portion (5) extending rearwardly from the lower portion of the stern (4) of the main hull body (1) and having an upper deck surface which is above the water level (WL) in calm water conditions.

## Patentansprüche

1. Schiffsrumpf mit einer Verlängerung (15), die sich von dem unteren Bereich des Bugs (2) des Hauptrumpfkörpers nach vorne erstreckt, wobei die Verlängerung eine obere Deckfläche aufweist, die sich bei ruhigen Wasserbedingungen über dem Wasserniveau (WL) befindet, dadurch gekennzeichnet, daß die Verlängerung (15) eine Spitze (16) aus Hartgummi und einen dehnbaren Balg (17) aufweist, und daß Mittel (18) vorhanden sind, um den Balg (17) auszudehnen und zusammenzuziehen und so die Spitze (16) horizontal zu verschieben.

2. Schiffsrumpf nach Anspruch 1, gekennzeichnet durch einen gewölbten Abschnitt (5), der sich rückwärts vom unteren Bereich des Hecks (4) des Hauptrumpfkörpers (1) erstreckt und der eine obere Deckfläche aufweist, die sich bei ruhigen Wasserbedingungen oberhalb des Wasserniveaus (WL) befindet.

## Revendications

1. Coque comprenant un prolongement (15) qui s'étend vers l'avant depuis la partie inférieure de la proue (2) du corps principal de la coque, le prolongement comportant une surface de pont supérieur qui est située au-dessus du niveau de l'eau (WL) par mer calme, caractérisée en ce que le prolongement (15) comprend une extrémité (16) en caoutchouc dur et un soufflet de dilatation (17) et des moyens (18) sont prévus pour dilater et contracter le soufflet (17) et ainsi déplacer l'extrémité (16) dans le sens horizontal.

2. Coque suivant la revendication 1, caractérisée par une partie bulbeuse (5) qui s'étend vers l'arrière depuis la partie inférieure de la poupe (4) du corps principal (1) de la coque et comportant une surface de pont supérieur qui est située au-dessus du niveau de l'eau (WL) par mer calme.
